# FASCICULE DE BREVET EUROPEEN

(11) **EP 1 857 380 B1**
(45) Date de publication et mention de la délivrance du brevet: **10.08.2011**
(21) Numéro de dépôt: 07290560.7
(22) Date de dépôt: 04.05.2007
(51) Int. Cl.: B65G 1/04, A01N 1/02

(54) **Equipement et procede de distribution de poches de sang**
Einrichtung und Verfahren zum Verteilen von Blutbeuteln
Equipment and method for distributing pouches of blood

(30) Priorité: 15.05.2006 FR 0604282
(43) Date de publication de la demande: 21.11.2007
(60) Demande divisionnaire: 09157329.5
(73) Titulaire: EFS Nord de France, 59800 Lille (FR)
(72) Inventeur: Dernis, Dominique, 59520 Marquette-lez-Lille (FR); Becquart, Jean-Pierre, 59390 Lys-lez-Lannoy (FR)
(74) Mandataire: Hirsch & Associés

(56) Documents cités:
- DE-A1- 19 716 913

## Description

La présente invention concerne un procédé de distribution de poches de sang ou produits dérivés vers des rayons d'un magasin de sortie.

Le sang ou produit dérivé prélevé sur un donneur est recueilli dans une poche numérotée qui est stockée en chambre réfrigérée pendant que, en laboratoire, s'effectue un contrôle de qualité et une analyse d'échantillons qui en ont été prélevés.

De façon classique, un opérateur revient dans la chambre réfrigérée pour coller sur la poche une étiquette indiquant le type de son contenu, par exemple du sang, du plasma, un concentré de globules rouges ou encore des plaquettes, ainsi que les caractéristiques de ce contenu, comme par exemple le groupe sanguin. L'étiquette permet alors d'effectuer un tri pour regrouper les poches de même type dans des bacs affectés à chaque type.

Une telle organisation du tri nécessite plusieurs interventions successives de la part d'un opérateur, ce qui limite la cadence de production. En outre, cette pluralité d'interventions humaines risque d'affecter le respect de la continuité de la chaîne du froid.

La présente invention vise à proposer un système permettant de diminuer l'acuité d'au moins l'un des problèmes ci-dessus.

Pour une meilleure compréhension, il est décrit tout d'abord un équipement de distribution d'une poche de produit sanguin, d'un certain type parmi une pluralité de types possibles, vers une parmi une dite pluralité de zones de stockage en sortie, chacune propre à un type particulier, l'équipement comprenant:
- un système informatique, comportant des moyens mémoires agencés pour recevoir et mémoriser des éléments d'information, de contrôle et de résultats d'analyse relatifs à un échantillon du produit sanguin considéré, afin de constituer un fichier, accessible en lecture, descriptif du dit produit sanguin correspondant à un type de produit, et
- un automate de distribution de la poche, comportant des moyens de lecture du fichier descriptif agencés pour commander des moyens de réception et des moyens de distribution de la poche vers l'une des zones de stockage en sortie, en fonction de données de type de produit lues dans le fichier.

Ainsi, la distribution ou tri de poches successives s'effectue automatiquement, de sorte que l'intervention humaine est réduite, voire disparaît totalement. Le débit peut donc dépasser celui d'un opérateur humain et, en outre, la continuité de la chaîne du froid et sa traçabilité peuvent être assurées.

Une caractéristique importante à relever dans l'invention réside dans le fait que la distribution des poches, avec répartition dans les zones de stockage, s'effectue d'après leur contenu et non par lecture d'une étiquette spécifiant initialement une adresse de destination, comme classiquement pour le courrier ou les colis postaux. L'adressage "par le contenu" selon la présente invention évite en particulier tout risque d'erreur de répartition dans la distribution.

Il est avantageusement prévu des moyens de stockage temporaire des poches dans une zone tampon, en amont de l'automate, qui peut être réfrigérée pour permettre d'attendre les résultats d'analyse. On comprendra toutefois qu'une telle zone tampon ne fait pas partie de l'essence de l'invention, puisque son utilité est liée au délai du laboratoire d'analyse, qui est externe à l'invention.

Pour enchaîner des répartitions successives de poches d'un lot, chaque poche peut être munie d'un identifiant propre, le système informatique étant alors agencé pour repérer le fichier au moyen de l'identifiant. Sinon, le système informatique peut être prévu pour compter les poches reçues et associer à chacune un numéro de rang, ce qui représente une identification par une valeur relative, qui est donc moins sûre que l'identifiant, absolu, évoqué ci-dessus.

De façon préférée, l'équipement comporte un dispositif de fourniture, à chaque poche, d'un support d'informations permettant notamment la détermination du type de produit.

Bien qu'il soit possible d'établir un tableau général de correspondance entre l'identifiant de chaque poche et le type de son contenu qui a été déterminé par l'analyse, il est évidemment plus commode d'éclater un tel tableau en autant de "lignes" d'informations de correspondance, chaque ligne étant écrite sur une étiquette ou équivalent physiquement liée à la poche considérée.

Avantageusement, le dispositif de fourniture de support d'informations est agencé pour être inhibé par le système informatique en cas de détection par celui-ci, dans le fichier correspondant, d'un défaut de conformité du produit à une spécification prédéterminée.

Une poche à contenu défectueux sera, avec certitude, bloquée au plus tard dans le circuit de distribution finale puisqu'il lui manquera les informations de type nécessaires à toute utilisation.

Le dispositif de fourniture de support d'information peut être agencé pour inscrire lui-même, sur le support, les dites informations de spécification du type de produit.

Selon une forme de réalisation intéressante, le support d'informations est une étiquette électronique à lecture / écriture par ondes radio, RFID.

L'écriture de l'étiquette peut donc être effectuée par un dispositif électronique ne nécessitant pas la présence d'un opérateur, tout comme d'ailleurs une étiquette classique, c'est-à-dire du genre papier, qui serait éditée et collée par un dispositif d'étiquetage.

Pour assurer un meilleur contrôle de la qualité, le système informatique comporte de préférence des moyens de lecture agencés pour repérer un identifiant de donneur de sang dans l'identifiant de la poche et pour commander des moyens de recherche d'un même identifiant relatif à un dit fichier, établi pour une poche antérieurement analysée, afin d'alimenter des moyens comparateurs agencés pour comparer le fichier établi à un dit fichier en cours d'établissement pour une poche courante, afin de signaler toute discordance entre deux jeux de paramètres déterminés parmi les données des fichiers respectifs.

L'équipement est avantageusement agencé pour recevoir de dits paramètres variables sous la commande d'un utilisateur. L'opérateur peut ainsi adapter le contrôle d'entrée pour, par exemple, adapter des plages de valeurs de paramètres en fonction du donneur particulier, c'est-à-dire en fonction de ses antécédents lus dans un fichier antérieur. On peut ainsi réduire une plage générale de valeurs acceptables d'un paramètre à une plage personnalisée, pour la limiter à des valeurs autour d'une valeur de paramètre mesurée lors d'une analyse antérieure du donneur, ce qui permet de détecter une dérive anormale, même si les valeurs absolues du paramètre restent dans une plage générale acceptable.

L'automate comporte par exemple un convoyeur agencé pour transporter les moyens de stockage temporaire des poches de la zone tampon jusqu'aux moyens de distribution, le convoyeur traversant de préférence un guichet d'étanchéité sanitaire séparant la zone tampon d'une salle contenant les moyens de distribution. Le guichet peut même se présenter sous la forme d'un tunnel, à parois étanches et isothermes, si la zone tampon est distante de l'automate.

L'automate de distribution comporte avantageusement des moyens de contrôle de qualité du contenu des poches, comprenant un capteur optique d'image du produit à travers une zone de paroi transparente de la poche, relié en sortie à des moyens de calcul agencés pour analyser une image reçue d'après des critères définis et pour fournir, le cas échéant, une indication de non-conformité.

Dans une forme de réalisation particulière, les moyens de distribution comportent des moyens de manutention des poches, comprenant un bras mobile de distribution associé à une source de dépression d'air reliée à une ventouse, de préférence plusieurs, en extrémité libre du bras, de préhension de poche et de dépôt de celle-ci dans un parmi une dite pluralité de bacs de zone de stockage.

La manipulation pneumatique limite ainsi le risque de détérioration des poches.

Les moyens de manutention sont avantageusement associés à des moyens de calcul agencés pour tenir à jour une table de remplissage contenant une dite pluralité de niveaux de remplissage des zones de stockage respectives, les moyens de manoeuvre du bras étant agencés pour en déplacer la dite extrémité libre selon en particulier la direction verticale, et les moyens de calcul étant agencés pour commander la descente de l'extrémité libre au-dessus du bac considéré et pour commander, à la source de dépression d'air, une mise à l'évent de la ventouse lorsque celui-ci présente un écart de niveau déterminé par rapport au niveau d'un fond du bac considéré.

Les moyens de calcul peuvent en particulier être agencés pour, d'une part, commander, aux moyens de manoeuvre, un remplissage des bacs ordonné selon un chapelet prédéterminé de positions adjacentes et sur plusieurs couches de poches, et pour, d'autre part, tenir à jour la table de remplissage par des informations de remplissage de chaque couche afin que, lorsque le fond est garni d'un certain nombre de couches de poches, d'épaisseur prédéterminée en position de repos, la valeur du dit écart de niveau par rapport au fond soit accrue d'un même nombre de fois la valeur d'épaisseur de poche.

Les poches vont ainsi toujours être relâchées à une même altitude relative, par rapport au fond nu qui les reçoit ou bien par rapport à la surface supérieure d'une poche d'une couche inférieure. Pour déterminer la valeur de l'écart ci-dessus, les moyens de calcul peuvent par exemple déplacer un curseur ou index informatique qui indique la position d'un front d'onde de remplissage de la couche incomplète. Lorsque ce front d'onde atteint l'extrémité du chapelet de positions offertes dans la couche considérée, il s'agit alors d'accroître l'écart ci-dessus pour conserver la même hauteur de chute par rapport à la nouvelle couche de référence.

Les bacs présentent avantageusement des dispositions relatives telles que leurs distances respectives, par rapport à une position de référence au repos de l'extrémité libre du bras, varient en fonction inverse de fréquences de distribution correspondant à un histogramme des types respectifs de produit antérieurement distribués.

Le trajet moyen d'extrémité libre du bras est ainsi minimal, ce qui permet d'obtenir une cadence de distribution optimale.

Pour effectuer un bilan matière afin de détecter toute erreur dans le fonctionnement global de l'équipement, l'automate peut être agencé pour compter un nombre de poches reçues par les moyens de distribution et pour en décompter un nombre de poches fournies dans les zones de stockage.

L'invention concerne un procédé selon la revendication 1. Il est ainsi décrit un procédé de distribution d'une poche, contenant un produit sanguin d'un type particulier parmi une pluralité de types possibles, vers une zone particulière de stockage dédiée à un type particulier de dit produit parmi une dite pluralité de zones de stockage, caractérisé par le fait que l'on analyse un échantillon du contenu de la poche à distribuer et que le résultat d'analyse commande la distribution.

La distribution de telles poches représente, de façon générale, un routage par commutation de paquets, dans lequel les paquets à traiter selon le procédé ne comportent pas de champ ou étiquette d'adresse vers une zone de stockage précise. Il s'agit donc, selon l'invention, d'un adressage d'après le contenu (utile) du paquet, qui va donc, en cours du processus d'exécution des étapes du procédé, déterminer la zone de stockage à viser.

Selon un mode de mise en oeuvre avantageux, la poche étant repérée par un identifiant propre :
- on stocke temporairement la poche, à distribuer, dans une zone tampon,
- on effectue la dite analyse d'échantillon et on mémorise le résultat d'analyse, dans une bibliothèque que l'on s'est procurée, en association avec l'identifiant de la poche, afin de constituer ainsi un fichier de poche descriptif du dit produit sanguin correspondant à un type de produit, accessible en lecture,
- on transmet la poche à un automate de distribution de dite poche, et, par lecture de l'identifiant de poche, on adresse le fichier descriptif correspondant de type de produit pour commander la distribution.

L'identifiant propre n'est pas un élément essentiel de l'invention, et il intervient ci-dessus dans une forme de réalisation qui est certes avantageuse mais qui n'est pas obligatoire. En effet, si le problème de rendement n'était pas critique, rien n'interdirait de ne traiter, à tout instant, qu'une seule poche à la fois, qui, une fois distribuée dans l'une des zones de stockage, serait immédiatement prélevée. L'unicité de la poche rendrait alors inutile toute identification de celle-ci lors du déroulement du processus de distribution. On pourrait aussi compter le rang de poches successives. L'invention traite donc essentiellement un problème de distribution, l'identification entre poches d'un même lot pouvant certes être intéressante quant au rendement mais annexe par rapport aux moyens essentiels de l'invention pour résoudre le problème posé de respect de la chaîne du froid.

En pareil cas, il peut être prévu qu'un opérateur, effectuant la dite lecture de l'identifiant de la poche, inscrive, sur un support de données associé à la poche, le type de produit fourni en retour par le fichier descriptif de type en bibliothèque. Le support de données peut en particulier recevoir initialement l'identifiant de la poche.

Pour une meilleure compréhension, il est en outre décrit un procédé d'optimisation d'un équipement tel que décrit précédemment, dans lequel on mémorise un histogramme de pourcentage de chaque type de produit à distribuer et on prévoit une disposition relative des zones de stockage telle que leurs distances respectives, par rapport à une position de référence au repos d'une extrémité d'un bras manipulateur de distribution, varient entre elles en fonction inverse du dit pourcentage.

L'invention sera mieux comprise à l'aide de la description suivante d'un mode préféré de mise en oeuvre du procédé de distribution selon l'invention et d'un équipement de distribution mettant en oeuvre le procédé ainsi qu'un procédé d'optimisation d'un tel équipement, en référence au dessin annexé, selon lequel:
- la figure 1 représente physiquement l'équipement, et
- la figure 2 est un diagramme fonctionnel de l'équipement selon l'invention, ce diagramme illustrant aussi le procédé de distribution selon l'invention.

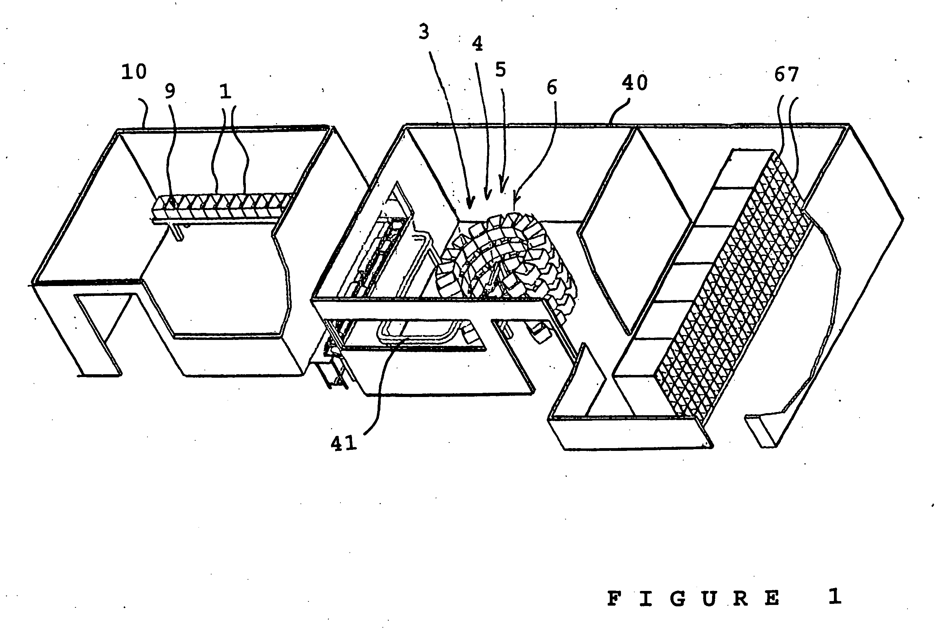

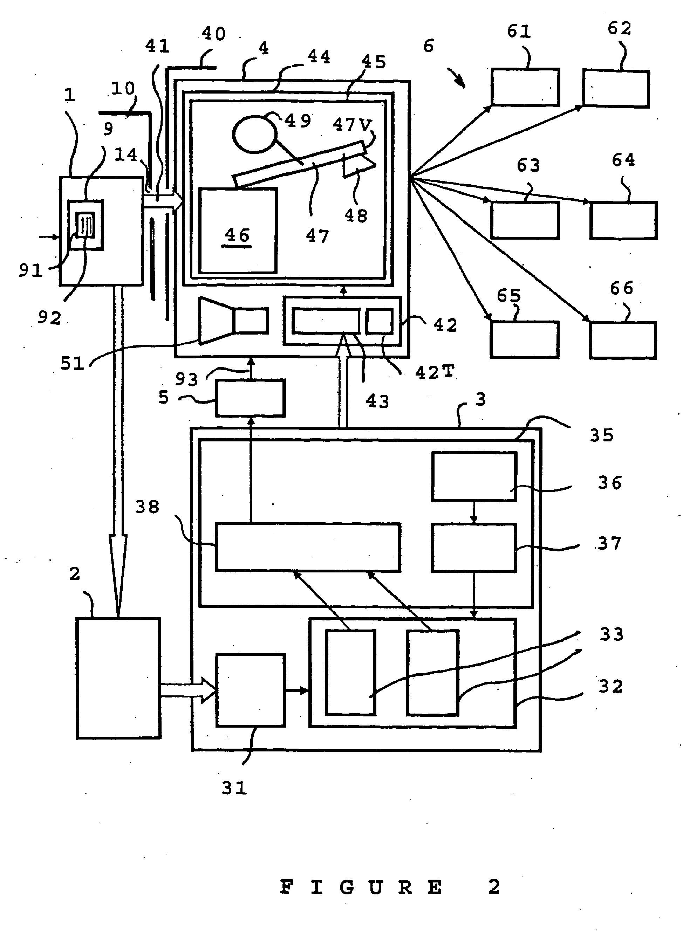

L'équipement représenté sur les figures 1 et 2 est destiné à distribuer des poches 9, de produit sanguin qui a été prélevé sur un donneur, vers diverses sorties possibles, en fonction du type de contenu de la poche 9. Ce produit contenu peut être de divers types parmi une pluralité de types possibles, par exemple du sang brut, du plasma, un concentré de globules rouges ou autre, les opérations correspondantes étant effectuées en amont du présent équipement. Il s'agit donc de diriger chaque poche 9 vers un rayon spécifique de stockage, parmi plusieurs appartenant à un magasin de stockage en sortie et d'expédition, et ceci d'après leur type de contenu pour ensuite les expédier, avec le marquage de type voulu, vers les utilisateurs. Un contrôle de la qualité de chaque prélèvement est en outre ici assuré.

Comme il s'agit ici d'un traitement par lots, chaque poche 9 est repérée par un identifiant propre 91 constitué ici par un mot de code-barre imprimé sur la poche 9, ou sur une étiquette collée sur celle-ci.

L'équipement comporte, en tête, des bacs 1 de stockage temporaire des poches 9 dans une zone tampon formée par salle de stockage 10 réfrigérée par exemple entre 2 et 6 degrés. Les bacs 1 sont disposés sur une bande d'un convoyeur 41 d'alimentation d'un automate 4 de distribution des poches 9 à trier. Pour des raisons pratiques, l'automate 4 proprement dit est situé dans une autre salle, de distribution, référencée 40, réfrigérée de même et reliée à la salle de stockage 10 par un tunnel, à parois étanches et isothermes, muni d'un guichet 14 formant un rideau mobile qui ne s'ouvre que pour le passage d'un bac
1. Deux cellules photoélectriques ou capteurs mécaniques équivalents, non dessinés, détectent respectivement l'arrivée d'un bac 1 devant le guichet 14, pour ouvrir le rideau, et le passage complet du bac 1 par le guichet 14, pour fermer celui-ci.

Pour commander l'automate 4, un système informatique 3 comporte des circuits mémoires constituant une bibliothèque 32 recevant, par des circuits d'entrée 31, et mémorisant, en association avec chaque identifiant de poche 91, des éléments d'information, de contrôle et de résultats d'analyse relatifs à un échantillon du produit sanguin considéré, afin de constituer un fichier 33, accessible en lecture, contenant des éléments d'information descriptifs du produit sanguin correspondant au type du produit de la poche 9 parmi la pluralité de types.

L'analyse du contenu de la poche 9 considérée, portant en fait sur diverses portions d'un échantillon prélevé, pour autant d'analyses particulières, est effectuée dans un laboratoire classique 2, qui ne fait pas partie de l'invention d'équipement elle-même mais qui fournit les données d'analyse qui vont permettre de commander le tri.

L'automate de distribution 4 comporte un ensemble de distribution 44 comportant une mécanique 45 de manutention des poches 9, comprenant des éléments 46 de manoeuvre d'un bras mobile de distribution 47 associé à une source de dépression d'air 49 reliée à une (en pratique quatre) ventouse 48, en extrémité libre 47V du bras 47, de préhension de poche 9 et de dépôt de celle-ci dans une parmi une dite pluralité 6 de zones de stockage, ici des bacs 61, 62, 63, 64, 65 et 66 en sortie, chacun propre à un dit type particulier, en sortie du système. La référence 67 de la figure 1 désigne un ensemble de tiroirs 67 en sortie, pour vider un bac 61-66 respectif lorsqu'il est rempli.

En variante, il peut être prévu que le convoyeur 41 se poursuive en aval, avec divers embranchements de sortie comportant chacun un portillon rotatif, rabattu au repos en une position latérale parallèle à la direction d'extension du convoyeur 41, c'est-à-dire en continuité avec une paroi latérale correspondante, et pouvant être ouvert à 30 ou 45 degrés par exemple pour constituer une glissière latérale venant obstruer le passage du convoyeur 41 afin de capter la poche 9 voulue. Il peut encore être prévu des poussoirs latéraux, ou tiroirs transversaux, qui repoussent la poche 9 dans l'embranchement de sortie approprié.

L'ensemble de distribution 44 est commandé par une unité centrale 42 comportant des circuits 43 de lecture de chaque fichier descriptif 33, afin de commander l'ensemble 44 de distribution des bacs 1 contenant les poches 9 stockées provenant de la salle de stockage temporaire 10, en fonction des éléments d'information, descriptifs du type de produit, lus dans le fichier 33 de la poche 9 considérée.

Le convoyeur 41 transporte périodiquement un bac 1 de la salle de stockage 10 jusqu'à l'ensemble de distribution 44, chaque fois que l'unité centrale 42 a compté un nombre de poches 9 distribuées qui atteint presque un nombre prédéterminé de contenance de chaque bac 1, tout bac 1 vide étant renvoyé par un circuit de retour non dessiné. Pour l'alimentation en bacs 1, le convoyeur 41 traverse un guichet d'étanchéité sanitaire 14 séparant la salle de stockage temporaire 10 de la salle 40, de distribution.

Afin de renseigner l'utilisateur final, il est ici prévu un distributeur 5 d'un support 93 d'informations de spécification du type de produit pour chaque poche 9, c'est-à-dire, d'une façon générale, tout ou partie du fichier 33 considéré, des détails à l'intérieur de chaque type pouvant être indiqués. Le distributeur 5 est ici inhibé par le système informatique 3 en cas de détection par celui-ci, dans le fichier correspondant 33, d'un défaut de conformité du produit à une spécification prédéterminée. Hormis bien évidemment un problème de contamination, il peut par exemple s'agir d'une teneur insuffisante en certaines composantes du produit sanguin considéré.

Le distributeur 5 peut, par exemple, être un simple distributeur d'étiquettes 93 qu'un opérateur va coller ou attacher aux poches 9 respectives, après les avoir renseignées par les données voulues du fichier 33, fournies par l'unité centrale 42 par l'intermédiaire d'un écran d'affichage. Il peut toutefois être prévu que le distributeur 5 inscrive lui-même les informations de spécification du type de produit, sur une étiquette 93, qu'il peut éventuellement coller lui-même, ou directement sur une zone de la poche 9, autre qu'une zone réservée à l'identifiant 91. En variante, le support d'informations 93 est une étiquette électronique à lecture / écriture par ondes radio, RFID, le dispositif 5 comportant donc des circuits radio d'écriture / lecture.

L'automate 4 est aussi prévu pour effectuer un contrôle externe du contenu de chaque poche 9. Il comporte à cet effet un capteur d'image 51 qui saisit une image de ce contenu à travers une zone transparente de la poche 9 et qui la fournit à l'unité centrale 42 pour un contrôle d'aspect par analyse de celle-ci en référence à des images ou critères définis, comme par exemple la couleur ou encore la granulométrie.

Afin de mieux encore contrôler la qualité du produit sanguin, le système informatique 3 comporte une unité centrale 35 comprenant des circuits de lecture 36 pour repérer un identifiant 92 de donneur de sang dans l'identifiant 91 fourni à la bibliothèque 32 et pour commander des circuits 37 de recherche d'un même identifiant 92 relatif à tout autre fichier 33, établi pour une poche 9 antérieurement analysée, afin d'alimenter un comparateur 38 qui va comparer le fichier 33 établi à un fichier 33 en cours d'établissement pour une poche 9 courante, afin de signaler toute discordance entre deux jeux de paramètres déterminés parmi les données des fichiers 33 respectifs. Pour une plus grande souplesse dans l'exploitation ci-dessus, le système informatique 3 est prévu pour recevoir, provenant d'un utilisateur, de dits paramètres mais variables.

Pour gérer les opérations de distribution, l'unité centrale 42 commande les éléments 46 de manoeuvre du bras 47, qui sont agencés pour en déplacer l'extrémité libre 47V dans un plan horizontal, ramené à deux axes X, Y, mais aussi selon la direction verticale Z. Le déplacement en directions X, Y et Z peut être assuré par trois vérins respectivement orientés selon ces directions.

L'unité centrale 42 commande aux vérins la descente de l'extrémité libre 47V au-dessus du bac considéré 61-66 et commande, à la source de dépression d'air 49, une mise à l'évent de la ventouse 48 lorsque celle-ci présente un écart de niveau prédéterminé par rapport au niveau dans le bac considéré 61. Chaque poche 9 est ainsi relâchée à une hauteur prédéterminée et est ainsi posée délicatement. Dans cet exemple, l'unité centrale 42 commande, aux éléments de manoeuvre 46, un remplissage des bacs 61-66 ordonné selon un chapelet prédéterminé de positions adjacentes et sur plusieurs couches de poches 9, c'est-à-dire que les positions dans un plan horizontal, selon les axes X, Y, de relâchement des poches successives suivent une incrémentation, par exemple selon la direction X pour remplir une rangée, avec éventuellement une incrémentation à plus basse fréquence en direction Y pour remplir des rangées voisines.

Par ailleurs, comme il est ici prévu un remplissage sur plusieurs couches, l'unité centrale 42 tient à jour une table 42T de remplissage contenant une dite pluralité de niveaux de remplissage de chaque bac 61-66, et précisément des informations de remplissage de chaque couche, c'est-à-dire le taux de remplissage de la couche supérieure, incomplète. Le fond de chaque bac 61-66 est ainsi progressivement garni d'un certain nombre de couches de poches 9, couches d'épaisseur prédéterminée en position de repos des poches 9, sensiblement à plat, et, lorsqu'une couche est remplie, la valeur de l'écart de niveau par rapport au fond est alors accrue d'un même nombre de fois la valeur d'épaisseur de poche 9.

Pour optimiser la cadence de distribution, les bacs 61-66 présentent des dispositions relatives telles que leurs distances respectives, par rapport à une position de référence au repos de l'extrémité libre 47V du bras 46, varient en fonction inverse de fréquences de distribution correspondant à un histogramme des types respectifs de produit sanguin antérieurement distribués. Sur un lot de poches 9, la distance moyenne de déplacement de l'extrémité libre 47V est ainsi minimale.

Afin de détecter un disfonctionnement, l'unité centrale 42 compte le nombre de poches 9 reçues depuis la salle de stockage temporaire 10 et en décompte un nombre de poches 9 fournies dans les zones de stockage 6, d'où il résulte un bilan matière qui doit être nul en fin de cycle d'utilisation.

On notera que la partie informatique de l'automate 4 peut être située en dehors de la salle de distribution 40. En particulier, la séparation, ici faite, entre le système informatique 3 et l'unité centrale 42 de l'automate 4 a essentiellement un but didactique pour bien mettre en évidence les fonctions de commande de distribution, donc par le système informatique 3, par rapport aux fonctions de commande d'aiguillage pour effectuer la distribution. En pratique, de façon préférée, l'unité centrale 42 est déportée par rapport à l'ensemble de distribution 44 et intégrée avec l'unité centrale 35.

Le procédé selon l'invention consiste donc en une distribution de chaque poche 9 contenant un produit sanguin, d'une pluralité de types, vers une zone particulière de stockage 61-66 dédiée à un type particulier de dit produit parmi une pluralité 6 de zones de stockage 61-66, procédé dans lequel on analyse un échantillon du contenu de la poche 9 à distribuer et le résultat d'analyse commande la distribution, c'est-à-dire détermine l'endroit de destination, en quelque sorte une direction d'aiguillage.

Dans la forme de réalisation exposée ci-dessus à titre d'exemple, la poche 9 étant repérée par un identifiant propre 91 :
- on stocke temporairement chaque poche 9, à distribuer, dans la salle, tampon, de stockage temporaire 10,
- on effectue l'analyse d'échantillon et on mémorise le résultat d'analyse, dans la bibliothèque 32 que l'on s'est procurée, en association avec l'identifiant 91 de la poche 9, afin de constituer ainsi un fichier 33 de poche 9, accessible en lecture, descriptif du produit sanguin correspondant à un type de produit,
- on transmet la poche 9 à l'automate 4 de distribution de poche 9, et, par lecture de l'identifiant 91 de poche, on adresse le fichier 33 descriptif correspondant de type de produit pour commander la distribution.

Comme évoqué plus haut, il peut être prévu qu'un opérateur, effectuant la dite lecture de l'identifiant 91 de la poche 9, inscrive, sur un support de données associé à la poche 9, le type de produit fourni en retour par le fichier 33 descriptif de type en bibliothèque 32, ce support de données recevant éventuellement initialement l'identifiant 91 de la poche 9.

Pour optimiser la conception de l'équipement, il peut être prévu que l'on mémorise un histogramme de pourcentage de chaque type de produit sanguin à trier et on prévoit une disposition relative des zones de stockage 61-66 telle que leurs distances respectives, par rapport à la position de référence au repos de l'extrémité libre 47V du bras manipulateur 47, varient entre elles en fonction inverse du dit pourcentage.

## Revendications

1. Procédé de distribution d'une poche (9), contenant un produit sanguin d'un type particulier parmi une pluralité de types possibles, vers une zone particulière de stockage (61-66) dédiée à un type particulier de dit produit parmi une dite pluralité de zones de stockage (61-66), dans lequel on analyse un échantillon du contenu de la poche (9) à distribuer et que le résultat d'analyse commande la distribution et dans lequel, la poche (9) étant repérée par un identifiant propre (91) :
- on stocke temporairement la poche (9), à distribuer, dans une zone tampon (10),
- on effectue la dite analyse d'échantillon et on mémorise le résultat d'analyse, dans une bibliothèque (32) que l'on s'est procurée, en association avec l'identifiant (91) de la poche (9), afin de constituer ainsi un fichier de poche (33) descriptif du dit produit sanguin correspondant à un type de produit, accessible en lecture,
- on transmet la poche (9) à un automate (4) de distribution de dite poche (9), et, par lecture de l'identifiant (91) de la poche (9), on adresse le fichier (33) descriptif correspondant de type de produit pour commander la distribution.

2. Procédé selon la revendication 1, dans lequel un opérateur, effectuant la dite lecture de l'identifiant (91) de la poche (9), inscrit, sur un support de données (92) associé à la poche (9), le type de produit fourni en retour par le fichier (33) descriptif de type en bibliothèque (32).

3. Procédé selon la revendication 2, dans lequel le support de données (92) reçoit initialement l'identifiant (91) de la poche (9).

## Claims

1. A method for distributing a bag (9) containing a blood product of a particular type from among a plurality of possible types, to a particular storage area (61-66) dedicated to a particular type of said product from among a said plurality of storage areas (61-66), in which a sample of the content of the bag (9) to be distributed is analysed and the result of analysis controls the distribution, and in which, the bag (9) being identified by an identifier specific thereto (91):
- the bag (9) to be distributed is temporarily stored in a buffer area (10),
- said analysis of the sample is performed and the result of analysis is stored in a library (32) that has been procured, in association with the identifier (91) specific to the bag (9), in order to thereby constitute a file on the bag (33) which is descriptive of said blood product corresponding to a type of product, available for read access,
- the bag (9) is transmitted to an automatic dispenser (4) for said bag (9), and, through reading the identifier (91) of the bag (9), the corresponding file (33) descriptive of the type of product is addressed, in order to control distribution.

2. The method according to claim 1, in which an operator, performing said reading of the identifier (91) of the bag (9) enters, on a data carrier (92) associated with the bag (9), the type of product supplied in return by the file (33) descriptive of the type in the library (32).

3. The method according to claim 2, in which the data carrier (92) initially receives the identifier (91) of the bag (9).

## Patentansprüche

1. Verfahren zur Verteilung eines Beutels (9), der ein Blutprodukt eines besonderen Typs unter einer Vielzahl möglicher Typen enthält, zu einer besonderen Lagerzone (61-66), die für einen besonderen Typ des genannten Produktes unter einer genannten Vielzahl von Lagerzonen (61-66) bestimmt ist, bei dem eine Probe des Inhalts des zu verteilenden Beutels (9) analysiert wird und das Analyseergebnis die Verteilung bestimmt, und bei dem, wobei der Beutel (9) durch einen eigenen Identifikator (91) erfasst wird:
- der zu verteilende Beutel (9) vorübergehend in einer Pufferzone (10) gelagert wird,
- die Analyse der Probe durchgeführt und das Analyseergebnis in einer Bibliothek (32), die angeschafft wurde, in Verbindung mit dem Identifikator (91) des Beutels (9) gespeichert wird, um so eine beschreibende Datei (33) des Beutels des Blutprodukts entsprechend einem Produkttyp zu erstellen, die im Lesemodus zugänglich ist,
- der Beutel (9) an einen Automaten (4) zur Verteilung des Beutels (9) weitergeleitet wird, und durch Ablesen des Identifikators (91) des Beutels (9) die entsprechende beschreibende Datei (33) des Produkttyps adressiert wird, um die Verteilung zu steuern.

2. Verfahren nach Anspruch 1, bei dem ein Bediener, der das Ablesen des Identifikators (91) des Beutels (9) durchführt, in einen dem Beutel (9) zugeordneten Datenträger (92) den Produkttyp einträgt, der von der den Typ beschreibenden Datei (33) in der Bibliothek (32) zurück gemeldet wird.

3. Verfahren nach Anspruch 2, bei dem der Datenträger (92) am Anfang den Identifikator (91) des Beutels (9) empfängt.
